# EUROPÄISCHE PATENTSCHRIFT

(11) **EP 1 517 786 B1**
(45) Veröffentlichungstag und Bekanntmachung des Hinweises auf die Patenterteilung: **12.07.2006**
(21) Anmeldenummer: 03747355.0
(22) Anmeldetag: 25.04.2003
(51) Int. Cl.: B32B 27/00, C09D 201/00, C09D 11/10

(54) **MEHRSCHICHTMATERIALIEN ZUM HERSTELLEN VON VERPACKUNGEN**
MULTI-LAYER MATERIALS FOR PRODUCING PACKAGINGS
MATERIAUX MULTICOUCHES POUR LA PRODUCTION D'EMBALLAGES

(30) Priorität: 30.04.2002 DE 10219462
(43) Veröffentlichungstag der Anmeldung: 30.03.2005
(73) Patentinhaber: XSYS Print Solutions Deutschland GmbH, 70469 Stuttgart (DE); BASF Aktiengesellschaft, 67056 Ludwigshafen (DE)
(72) Erfinder: BRUCHMANN, Bernd, 67251 Freinsheim (DE); BEDAT, Joelle, F-67850 Offendorf (FR); KACZUN, Jürgen, 67157 Wachenheim (DE); POGANIUCH, Peter, 67434 Neustadt (DE); WAGNER, Eva, 67346 Speyer (DE); STUMBE, Jean-Francois, F-67200 Strasbourg (FR)
(74) Vertreter: Isenbruck, Günter
(86) Internationale Anmeldenummer: PCT/EP2003/004286
(87) Internationale Veröffentlichungsnummer: WO 2003/093001

(56) Entgegenhaltungen:
- EP-A- 0 451 657
- WO-A-02/36697
- GB-A- 2 324 797

## Beschreibung

Die Erfindung betrifft Mehrschichtmaterialien zum Herstellen von Verpackungen aus mindestens 2 Folien sowie einer mit einer Druckfarbe gedruckten Schicht, wobei die Druckfarbe einen funktionelle Gruppen umfassenden hyperverzweigten Polyharnstoff enthält. Die Erfindung betrifft weiterhin eine Druckfarbe, die einen funktionelle Gruppen aufweisenden, hyperverzweigten Polyharnstoff umfasst, sowie die Verwendung dieser Druckfarbe zum Herstellen von Mehrschichtmaterialien.

Mehrschichtmaterialien zum Herstellen von Verpackungen, insbesondere Lebensmittelverpackungen, sind bekannt. Als Beispiele seien EP-A 695 329, EP-A 707 956, EP 802 045, EP-A 1 008 442 oder EP-A 1 162 060 genannt. Derartige Mehrschichtmaterialien bestehen aus zwei oder mehreren Kunststofffolien, beispielsweise Polyolefinfolien, Metallfolien oder metallisierten Kunststofffolien die, beispielsweise durch Laminieren und mit Hilfe geeigneter Kaschierkleber, miteinander verbunden werden. Bei den Folien kann es sich jeweils um einschichtige, aber auch um mehrschichtige, durch Coextrusion hergestellte Folien handeln. Die Verbunde können noch weitere funktionale Schichten, beispielweise Geruchssperrschichten oder Wasserdampfsperren umfassen.

Mehrschichtmaterialien zum Herstellen von Verpackungen sind üblicherweise bedruckt oder beschichtet. Die Druckfarbe kann dabei auf die Oberfläche des Mehrschichtmaterials aufgebracht sein, sie kann sich aber auch zwischen zwei Folien befinden. Drucklacke werden entweder als Grundierung auf den Bedruckstoff aufgetragen (so genannte "primer") oder nach dem Druckvorgang als Schutzüberzug auf den bedruckten Bedruckstoff aufgetragen. Drucklacke enthalten kein Farbmittel, sind aber abgesehen davon im Regelfalle ähnlich wie Druckfarben zusammengesetzt.

Die Anforderungen an Druckfarben bzw. Drucklacke, die zur Herstellung von mehrschichtigen Verpackungsmaterialien geeignet sind, sind vielfältig. Beim Drucken auf nicht saugende Bedruckstoffe wie Polymer- oder Metallfolien kann die Druckfarbe naturgemäß nicht in den Bedruckstoff eindringen, sondern nach dem Abdampfen des Lösungsmittels verbleibt ein getrockneter Film auf dem Bedruckstoff. Druckfarben für derartige Bedruckstoffe müssen daher sehr gute filmbildende Eigenschaften sowie eine ganz besonders gute Haftfestigkeit aufweisen, damit sich der Druckfilm bei mechanischer Beanspruchung nicht wieder vom Untergrund ablöst. Da Verbunde häufig chemisch unterschiedliche Folien enthalten, beispielsweise polare Polyamid- oder PET-Folien und unpolare Polyolefin-Folien, müssen geeignete Druckfarben auch auf verschiedenartigen Untergründen gleichermaßen gut haften.

Druckfarben mit konventionellen Bindemitteln weisen auf vielen Bedruckstoffen keine ausreichende Haftfestigkeit auf, so dass Haftvermittler wie bestimmte Silane oder Titanate zugegeben werden müssen. Beispielhaft sei hier auf US 5,646,200 verwiesen. Aber selbst bei Zusatz von Haftvermittlern ist die Haftung nicht auf allen Bedruckstoffen befriedigend, so dass sich die Folien von mehrschichtigen Verbundmaterialien voneinander lösen können. Da mehrschichtige Verbundmaterialien häufig im Lebensmittel-Bereich eingesetzt werden, ist es weiterhin generell wünschenswert, auf niedermolekulare Bestandteile in Druckfarbenrezepturen so weit wie möglich zu verzichten. Aus ökonomischen Gründen ist es ohnehin wünschenswert.

Dendrimere, Arborole, Starburst Polymers oder hyperverzweigte Polymere sind Bezeichnungen für polymere Strukturen, die sich durch eine verzweigte Struktur mit vielen Verzweigungsstellen und eine hohe Funktionalität auszeichnen. Bei Dendrimeren handelt es sich um molekular einheitliche Makromoleküle mit einem hoch symmetrischen Aufbau. Sie sind aber nur sehr umständlich in vielstufigen Synthesen synthetisierbar, sind dementsprechend nur in geringen Mengen verfügbar und sehr teuer.

Im Gegensatz dazu sind hyperverzweigte Polymere sowohl molekular wie strukturell uneinheitlich. Sie weisen Äste unterschiedlicher Länge und Verzweigung auf. Zur Synthese hyperverzweigter Polymerer eigenen sich insbesondere so genannte ABx-Monomere. Diese weisen zwei verschiedene funktionelle Gruppen A und B auf, die unter Bildung einer Verknüpfung miteinander reagieren können. Die funktionelle Gruppe A ist dabei nur einmal pro Molekül enthalten und die funktionelle Gruppe B zweifach oder mehrfach. Durch die Reaktion der besagten ABx-Monomere miteinander entstehen unvernetzte Polymere mit regelmäßig angeordneten Verzweigungsstellen. Die Polymere weisen an den Kettenenden fast ausschließlich B-Gruppen auf. Nähere Einzelheiten sind beispielsweise in J.M.S. - Rev. Macromol. Chem. Phys., C37(3), 555-579 (1997) offenbart.

EP-A 0 451 657 offenbart die Verwendung oxidativ vernetzender isocyanatfreier Urethanharze erhältlich aus 100 Gew.-Teilen eines Esters aus einem aliphatischen C₃-C₈₋Alkohol mit mindestens 3 OH-Gruppen, einer ungesättigten C₈-C₄₀-Fettsäure und gegebenenfalls einer aliphatischen oder aromatischen C₄-C₂₀-Polycarbonsäure, 3 - 120 Gew.-Teilen einer C₅-C₁₅-Polyhydroxycarbonsäure und 10 - 100 Gew.-Teilen eines aliphatischen oder cycloaliphatischen Polyisocyanats, als Druckfarbenbestandteile.

Harnstoffgruppen enthaltende hochfunktionelle Polymere sind prinzipiell bekannt, beispielsweise aus WO 98/50453 oder der noch unveröffentlichten deutschen Anmeldung DE 102 04 979.3. Mehrschichtmaterialien mit derartigen Polyharnstoffen sind bislang nicht bekannt.

Aufgabe der Erfindung war es, Mehrschichtmaterialien zur Herstellung von Verpackungen bereitzustellen, die eine verbesserte Haftung zwischen den einzelnen Folien aufweisen. Aufgabe war es insbesondere, polare Folien aufweisende Mehrschichtmaterialien bereitzustellen, die eine verbesserte Haftung zwischen den einzelnen Folien aufweisen. Aufgabe war es weiterhin, dazu geeignete Druckfarben und Drucklacke bereitzustellen, die außerdem möglichst wenig niedermolekulare Komponenten aufweisen und kostengünstig herzustellen sind.

Gegenstand der vorliegenden Erfindung sind daher Mehrschichtmaterialien zum Herstellen von Verpackungen aus mindestens
- einer Folie 1 aus einem polymeren Material,
- mindestens einer eine Druckschicht, erhältlich durch Bedrukken oder Beschichten mit einer Druckfarbe,
- einer weitere Folie 2,
wobei die Druckfarbe mindestens einen funktionelle Gruppen aufweisenden, hyperverzweigten Polyharnstoff als Bindemittel umfasst und die funktionellen Gruppen aus der Gruppe von Amino-, OH- oder verkappten Isocyanat-Gruppen ausgewählt werden.

In einem zweiten Aspekt der Erfindung wurde weiterhin eine Druckfarbe für den Flexo- und/oder Tiefdruck gefunden, die mindestens ein Lösemittel oder ein Gemisch verschiedener Lösemittel, mindestens ein Farbmittel, mindestens ein polymeres Bindemittel sowie optional weitere Zusatzstoffe umfasst, wobei es sich bei mindestens einem der polymeren Bindemittel um einen funktionelle Gruppen aufweisenden, hyperverzweigten Polyharnstoff handelt und die funktionellen Gruppen aus der Gruppe von Amino-, OH- oder verkappten Isocyanat-Gruppen ausgewählt werden.

Weiterhin wurde die Verwendung dieser Druckfarbe zum Bedrucken von Kunststoff- oder Metallfolien und zum Herstellen von Mehrschichtmaterialien gefunden.

In einem dritten Aspekt der Erfindung wurden Drucklacke gefunden, die mindestens ein Lösemittel oder ein Gemisch verschiedener Lösemittel, mindestens ein polymeres Bindemittel sowie optional weitere Zusatzstoffe umfassen, wobei es sich bei mindestens einem der polymeren Bindemittel um einen funktionelle Gruppen aufweisenden, hyperverzweigten Polyharnstoff handelt und die funktionellen Gruppen aus der Gruppe von Amino-, OH- oder verkappten Isocyanat-Gruppen ausgewählt werden. Weiterhin wurde deren Verwendung zum Grundieren, als Schutzlack sowie zum Herstellen von Mehrschichtmaterialien gefunden.

Überraschenderweise werden durch die Verwendung von Druckfarben und Drucklacken mit hyperverzweigten Polyharnstoffen, die Amino-, OH- oder verkappte Isocyanat-Gruppen als Bindemittel aufweisen, Verbunde mit hervorragender Haftung zwischen den einzelnen Schichten erhalten. Der Zusatz von Haftvermittlern ist nicht mehr erforderlich. Dabei war es selbst für den Fachmann ganz besonders überraschend und unerwartet, dass ohne Haftvermittler sogar bessere Ergebnisse erzielt werden, als wenn Haftvermittler zugesetzt werden. Insbesondere auf polaren Folien konnte die Haftung deutlich verbessert werden.

Zu der Erfindung ist im Einzelnen das Folgende auszuführen.

Die Folie 1 für das Mehrschichtmaterial besteht aus einem polymeren Material. Geeignete Folien für Verpackungsmaterialien sind beispielsweise in *Ullmann's Encyclopedia of Industrial Chemistry, 6*^{*th*} *Edt., 2000, Electronic Release* publiziert. Zu nennen sind beispielsweise Polyolefin-Folien wie Folien aus Polyethylen, Polypropylen oder Poly(4-Methyl-1-penten) oder Polystyrol. Bei Polyethylen-Folien kann es sich um Folien aus HDPE, LDPE oder LLDPE handeln. Es kann sich auch um Copolymere wie beispielsweise um Folien aus Ethylen-Vinylacetat-Copolymeren, Ethylen-Acrylsäure-Copolymeren oder Styrol/Butadien-Copolymeren handeln. Weiterhin können Folien aus PVC oder Polycarbonaten eingesetzt werden. Weiterhin können Folien aus polaren Materialien eingesetzt werden, beispielsweise Cellophan-Folien, Polyester-Folien, wie beispielsweise solche aus Polyethylenterephthalat, Polybutylenterephthalat oder Polyethylennaphthalat oder Polyamid-Folien, wie beispielsweise Folien aus PA 6, PA 12, PA 6/66, PA 6/12 oder PA 11.

Bevorzugt handelt es sich bei der Folie 1 um eine Folie aus Polyethylen, Polypropylen, Polystyrol, Polyester-oder Polyamid, ganz besonders bevorzugt sind PET-, PEN- oder Polyamid-Folien.

Bei der Folie 1 kann es sich um eine einschichtige Folie handeln. Es kann sich aber auch um eine mehrschichtige Folie handeln. Mehrschichtige Folien werden bevorzugt durch Coextrusion hergestellt. Die Schichten können aus chemisch gleichartigen, ähnlichen oder unterschiedlichen Polymeren bestehen. Beispielsweise kann eine Polyvinylalkohol-Schicht zwischen zwei Polyolefin-Folien eingebettet sein, oder LLDPE wird mit LDPE kombiniert. Der Begriff mehrschichtige Folien umfasst auch Laminate aus Polymerfolien und Metallfolien, insbesondere Aluminiumfolien.

Weiterhin können die Folien auch beschichtet sein. Zu nennen sind hier beispielsweise metallisierte Folien, insbesondere Al-bedampfte Folien oder mit SiO₂ beschichtete bzw. bedampfte Folien.

Für die Folie 2 können Polymerfolien, metallisierte Polymerfolien oder Metallfolien eingesetzt werden. Als Polymerfolien eigenen sich insbesondere die für Folie 1 offenbarten Materialien. Als Metallfolien werden insbesondere Aluminiumfolien eingesetzt, es kann sich beispielsweise aber auch um Zinnfolien, Kupferfolien oder Goldfolien handeln.

Besonders bevorzugte Mehrschichtmaterialien umfassen zumindest eine polare Folie in Kombination mit einer unpolaren Folie. Als Beispiele seien Verbunde aus Polyamid-Folien oder Polyester-Folien mit Polyolefin-, insbesondere mit Polyethylen- oder Polypropylen-Folien genannt. Weiterhin bevorzugt sind Mehrschichtmaterialien aus Polyamid- und Polyester-Folien oder Verbunde die jeweils nur Polyamid- oder nur Polyester-Folien umfassen.

Das erfindungsgemäße Mehrschichtmaterial umfasst weiterhin mindestens eine Druckschicht, die durch Bedrucken oder Beschichten mindestens einer der Folien mit einer Druckfarbe erhältlich ist.

Die gedruckte Schicht kann sich auf der Außenseite des Mehrschichtmaterials befinden. Bevorzugt ist die Druckschicht aber zwischen den beiden Folien angeordnet, also im Verbund eingebettet. Die Druckschicht kann sich direkt auf einer der Folien befinden, oder zwischen der Folie und der Druckschicht können sich noch eine oder mehrere andere Schichten befinden. Bevorzugt ist die Druckschicht direkt entweder auf Folie 1 oder auf Folie 2 aufgedruckt.

Das Mehrschichtmaterial kann auch zwei oder mehrere Druckschichten umfassen. Bevorzugt enthalten alle Druckschichten einen hyperverzweigten, funktionelle Gruppen aufweisenden Polyharnstoff mit den eingangs definierten funktionellen Gruppen. Die minimale Anforderung ist aber, dass zumindest eine der Druckschichten den besagten Polyharnstoff enthält. Die Druckschichten können übereinander gedruckt werden. Beispielsweise kann als erstes eine Grundierung, z.B. mit weißer Farbe, auf eine Folie gedruckt werden und danach eine zweite Schicht mit einem einfarbigen oder mehrfarbigen Dekor. Es kann aber auch die Grundierung auf die eine Folie und das Dekor auf die andere Folie gedruckt werden, oder aber die Grundierung auf die eine Seite und das Dekor auf die andere Seite derselben Folie.

Selbstverständlich kann ein Mehrschichtverbund auch noch weitere Folien über Folie 1 und Folie 2 hinaus umfassen. Die Abfolge der Folien im Verbund wird vom Fachmann je nach den gewünschten Eigenschaften und Verwendungszweck des Mehrschichtmaterials bestimmt.

Das Mehrschichtmaterial kann auch noch weitere Schichten umfassen, mit denen sich jeweils bestimmte Eigenschaften erreichen lassen. Zu nennen sind hier insbesondere Klebeschichten mit denen einzelne oder alle Schichten miteinander verbunden werden können. Weiterhin können zusätzliche Sperrschichten eingebaut werden. Beispielsweise können Polyvinylalkohol-Schichten oder Ethylen-Polyvinylalkohol-Schichten als Wasserdampfsperre eingebaut werden. Es können auch Geruchs- bzw. Aromasperren eingebaut werden. Geeignete Materialien dafür sind beispielsweise in EP-A 707 956 oder EP-A 802 045 offenbart.

Das Mehrschichtmaterial kann auch noch Schichten aus Drucklacken umfassen, beispielsweise zur Grundierung der Folien oder als Schutzlackierung. Dafür können einerseits übliche Drucklacke eingesetzt werden. Besonders vorteilhaft werden aber Drucklacke eingesetzt werden, die mindestens einen funktionelle Gruppen aufweisenden, hyperverzweigten Polyharnstoff als Bindemittel aufweisen, wobei die funktionellen Gruppen aus der Gruppe von Amino-, OH- oder verkappten Isocyanat-Gruppen ausgewählt werden.

Die Druckschichten im Mehrschichtmaterial sind erhältlich durch Bedrucken oder Beschichten der Folien mittels einer dazu geeigneten Druckfarbe. Bevorzugt wird mittels Flexodruck oder Tiefdruck gedruckt, in Spezialfällen kann aber auch Siebdruck eingesetzt werden.

Geeignete Druckfarben sind insbesondere Verpackungsdruckfarben für den Flexodruck oder Tiefdruck. Der Begriff Verpackungsdruckfarben ist selbsterklärend und beschränkend zugleich. Bei Verpakkungsdruckfarben handelt es sich um dünnflüssige, schnell trocknende Druckfarben. Sie enthalten dementsprechend relativ niedrig siedende Lösemittel. Der Siedepunkt beträgt im Regelfalle nicht mehr als 140°C. Siebdruckfarben sind ähnlich formuliert wie Flexo- oder Tiefdruckfarben, sie sind lediglich etwas viskoser eingestellt und weisen üblicherweise Lösemittel mit etwas-höheren Siedepunkten auf.

Erfindungsgemäß umfasst die Druckfarbe einen funktionelle Gruppen aufweisenden, hyperverzweigten Polyharnstoff als Bindemittel, wobei die funktionellen Gruppen aus der Gruppe von Amino-, OH- oder verkappten Isocyanat-Gruppen ausgewählt werden. Auch der Begriff Bindemittel ist selbsterklärend und beschränkend zugleich. Bindemittel sind einer der Hauptbestandteile von Druckfarben und für die eigentliche Filmbildung verantwortlich. Sie sorgen für die Verankerung von Pigmenten und Füllstoffen im Farbfilm und für die Haftung auf dem Substrat und werden in der für diesen Effekt notwendigen Menge eingesetzt.

Polyharnstoffe lassen sich generell aus mindestens difunktionellen Isocyanaten und mindestens difunktionellen primären oder sekundären Aminen erhalten.

Die vorliegende Erfindung wird mit hyperverzweigten Polyharnstoffen im eigentlichen Sinne, d.h. molekular und strukturell uneinheitlichen Polyharnstoffen ausgeführt.

Bevorzugt werden zur Ausführung der Erfindung reine Polyharnstoffe verwendet, d.h. Verbindungen die nur Harnstoff-Verknüpfungen aufweisen. Selbstverständlich können auch solche Polymere noch in untergeordnetem Maße Verknüpfungen aufweisen, die durch eigentlich nicht erwünschte aber unvermeidbare Nebenreaktionen hervorgerufen werden. Die Erfindung umfasst aber auch die Verwendung von hyperverzweigten Polymeren, die einen gewissen Anteil von Urethan-Verknüpfungen aufweisen. Im Regelfalle handelt es sich aber zumindest bei 70% aller Verknüpfungen eines Polymers um Harnstoffbindungen, bevorzugt mindestens 80 % und ganz besonders bevorzugt mindestens 90%.

Die Synthese der hyperverzweigten Polyharnstoffe kann bevorzugt wie im Folgenden geschildert erfolgen, ohne dass die Erfindung damit auf den Einsatz der nach dieser Herstellmethode synthetisierten Polyharnstoffe beschränkt wäre.

Bei der bevorzugten Synthese werden Di- oder Polyisocyanate mit verkappten NCO-Gruppen mit di- oder polyfunktionellen primären und / oder sekundären Aminen in einer zweistufigen Synthese umgesetzt.

Bei verkappten oder blockierten Isocyanaten sind die Isocyanat-Gruppen mit sogenannten Blockierungsreagenzien umgesetzt worden. Blockierungsreagenzien zeichnen sich dadurch aus, daß sie eine thermisch reversible Blockierung der Isocyanat-Gruppen bei Temperaturen von in der Regel unter 160°C gewährleisten. Als Blockierungsmittel können beispielsweise aliphatische Alkohole, Phenole, Caprolactam, 1H-Imidazol, 2-Methylimidazol, 1,2,4-Triazol, 3,5-Dimethylpyrazol, Malonsäuredialkylester, Acetanilid, Acetonoxim oder Butanonoxim eingesetzt werden. Bevorzugt kommen als Blockierungsmittel für die vorliegende Synthese lineare oder verzweigte aliphatische Monoalkohole, wie Methanol, Ethanol, Propanol, Butanol, Pentanol, Hexanol, Heptanol, Octanol, Isopropanol, Isobutanol oder 2-Ethyl-1-hexanol oder araliphatische Monoalkohole, wie Benzylalkohol oder Phenylethanol in Betracht. Besonders bevorzugt sind Butanol, Isopropanol sowie Benzylalkohol. Durch die Verkappung wird die Reaktivität des Isocyanats herabgesetzt, die Selektivität bezüglich der Reaktion mit unterschiedlich reaktiven Aminogruppen gesteigert und somit eine kontrollierte Reaktion ermöglicht.

In einem ersten Syntheseschritt (A) wird mindestens ein difunktionelles blockiertes Di- oder Polyisocyanat mit mindestens einem mindestens difunktionellen primären und / oder sekundären Amin unter Eliminierung des Blockierungsmittels umgesetzt. Die Mengenverhältnisse der Ausgangsprodukte werden dabei so gewählt, dass ABₓ-Monomere entstehen, die sowohl verkappte Isocyanat-Gruppen sowie mit diesen reaktive primäre und / oder sekundäre Aminogruppen aufweisen. Bei x handelt es sich um eine natürliche Zahl zwischen 2 und 8. Bevorzugt beträgt x 2 oder 3. Entweder handelt es sich bei A um die verkappten Isocyanat-Gruppen und bei B um die Aminogruppen oder es kann der umgekehrte Fall vorliegen.

In zweiten Syntheseschritt (B) werden die erhaltenen ABₓ-Monomere intermolekular zu einem hyperverzweigten Polyharnstoff umgesetzt.

Die Synthese kann vorteilhaft ohne Isolierung der ABₓ-Monomere erfolgen. Die Trennung der einzelnen Syntheseschritte erfolgt dabei über die Reaktionstemperatur. Zunächst wird bei einer niedrigeren Temperatur, beispielsweise 20 bis 80°C die Synthese der ABₓ-Monomere aus den Ausgangsstoffen vorgenommen. Anschließend wird die Polymerisation durch Erwärmen des Gemisches auf höhere Temperaturen, beispielsweise auf 90 bis 160°C vorgenommen.

Beispiele für geeignete Di- und/oder Polyisocyanate sind insbesondere leicht und billig verfügbare Isocyanate, wie aromatische Isocyanate wie 2,4-Toluylendiisocyanat (2,4-TDI), 2,4'-Diphenylmethandiisocyanat (2,4'-MDI), Triisocyanatotoluol, oder aliphatische Isocyanate, wie Hexamethylendiisocyanat (MDI), Isophorondiisocyanat (IPDI), 2-Butyl-2-ethylpentamethylendiisocyanat, 2-Isocyanatopropylcyclohexylisocyanat, 2,4,4- oder 2,2,4-Trimethylhexamethylendiisocyanat, 2,4'-Methylenbis(cyclohexyl)diisocyanat und 4-Methyl-cyclohexan-1,3-diisocyanat (H-TDI). Natürlich können auch Mischungen der genannten Isocyanate verwendet werden.

Die Amine werden aus Verbindungen ausgewählt, die mindestens zwei mit verkappten Ioscyanat-Gruppen reaktive primäre und / oder sekundäre Amin-Gruppen tragen. Beispiele umfassen aliphatische oder araliphatische Diamine wie beispielsweise Ethylendiamin, Butylendiamin N-Alkylbutylendiamin, Hexamethylendiamin, N-Alkylhexamethylendiamin oder Toluylendiamin, aliphatische oder araliphatische Triamine, wie beispielsweise Bis(aminoethyl)amin, Bis(aminopropyl)amin, Bis(aminobutyl)amin, Bis(aminopentyl)amin Bis(aminohexyl)amin, Tris(aminoethyl)amin, Tris(aminopropyl)amin, Tris(aminohexyl)amin oder Trisaminohexan. Weiterhin sind auch beliebige Mischungen aus mindestens zwei der genannten Verbindungen einsetzbar.

Vorteilhaft können bei der Synthese der ABₓ-Moleküle weiterhin verkappte Isocyanate und Amine eingesetzt werden, die jeweils Gruppen unterschiedlicher Reaktivität aufweisen. Durch die Wahl einer geeigneter Bedingungen, beispielsweise geeigneter Temperaturen lassen sich zunächst die reaktiveren Aminogruppen und / oder reaktiveren verkappten Isocyanatgruppen miteinander zu Umsetzung bringen, während die weniger reaktiven Gruppen vorzugsweise nicht umgesetzt werden. Sie reagieren erst in einer späteren Reaktionsphase, beispielsweise bei Erhöhung der Temperatur.

Beispiele für verkappte Diisocyanate mit Gruppen unterschiedlicher Reaktivität umfassen beispielsweise Isophorondiisocyanat (IPDI), 2,4-Toluylendiisocyanat (2,4-TDI) oder 2,4'-Diphenylmethandiisocyanat (2,4'-MDI). Weitere Beispiele umfassen auch solche Diisocyanate, deren verkappte NCO-Gruppen zunächst gleich reaktiv sind, bei denen sich jedoch durch Reaktion der ersten verkappten NCO-Gruppe ein Reaktivitätsabfall bei der zweiten Gruppe induzieren lässt. Beispiele dafür sind Isocyanate, deren NCO-Gruppen über ein delokalisiertes p-Elektronensystem gekoppelt sind, z.B. 1,4-Phenylendiisocyanat, 1,5-Naphthylendiisocyanat oder 2,6-Toluylendiisocyanat.

Beispiele für Amine mit Gruppen unterschiedlicher Reaktivität sind solche, die primäre und sekundäre Aminogruppen aufweisen, beispielsweise N-Alkylbutylendiamin oder Bis(aminoethyl)amin.

Die Herstellung eines AB₂-Moleküls sei beispielhaft für den Fall der Umsetzung eines verkappten Diisocyanates mit einem Triamin erläutert. Die Verkappung des Diisocyanats kann besonders elegant erfolgen, indem man den als Verkappungsmittel eingesetzten Alkohol auch als Lösemittel für die Reaktion einsetzt, und das Isocyanat in den Alkohol eintropft. Die Temperaturen sollten dabei unter 160°C, bevorzugt unter 100°C bleiben. Selbstverständlich kann man das verkappte Isocyanat auch in einer separaten Reaktion synthetisieren. 1 mol des verkappten Diisocyanates wird mit 1 mol eines Triamins mit 2 primären Aminogruppen und einer sekundären Aminogruppe, beispielsweise Diethylentriamin oder Dihexamethylentriamin umgesetzt. Vorzugsweise reagiert die basischere sekundäre Aminogruppe des Amins mit den verkappten Isocyanatgruppen während die primären noch weitgehend nicht reagieren. Das gebildete AB₂-Molekül weist eine verkappte NCO-Gruppe sowie zwei freie NH₂-Gruppen auf. Das AB₂-Molekül kann nun zu einem hyperverzweigten Polyharnstoff polykondensiert werden.

Ein AB₂-Molekül mit zwei verkappten NCO-Gruppen und einer Aminogruppe kann beispielsweise aus 1 mol eines Amins mit 3 primären Aminogruppen und 2 mol eines verkappten Isocyanates synthetisiert werden. Die notwendige Selektivität kann erreicht werden, indem man beispielsweise ein verkapptes Isocyanat mit NCO-Gruppen unterschiedlicher Reaktivität einsetzt.

Die Polymerisation kann in Substanz oder in einem geeigneten Lösungsmittel durchgeführt werden. Insbesondere geeignet als Lösungsmittel ist der als Verkappungsmittel eingesetzte Alkohol selbst, wie beispielsweise Butanol. Zur Beschleunigung der Reaktion können auch geeignete Katalysatoren zugegeben, wie beispielsweise Diazabicylooctan oder Dibutylzinn-dilaurat. Das Molekulargewicht des hyperverzweigten Polyharnstoffes lässt sich insbesondere über die Reaktionstemperatur und Reaktionszeit im Zuge der Polykondensation der ABₓ-Moleküle steuern.

Die nach dem beschriebenen Verfahren gebildeten hyperverzweigten Polyharnstoffe sind nach der Reaktion entweder mit Amino- oder mit verkappten NCO-Gruppen terminiert. Je nach Art des eingesetzten Amins handelt es sich bei den Amino-Gruppen um NH₂-Gruppen oder auch um NHR-Gruppen, wobei es sich bei R bevorzugt um C₁-C₆-Alkylgruppen handelt. Bevorzugt sind NH₂-Gruppen.

Andere Produkte sind durch weitere Synthesevarianten zugänglich.

Hyperverzweigte Polyharnstoffe mit kettenverlängerten Ästen lassen sich beispielsweise erhalten, indem zur Polymerisationsreaktion neben den ABₓ-Molekülen zusätzlich im molaren Verhältnis 1:1 ein verkapptes Diisocyanat oder ein Diamin zugegeben werden.

OH-Gruppen aufweisende Polyharnstoffe für die erfindungsgemäße Druckfarbe können beispielsweise erhalten werden, indem man den erhaltenen hyperverzweigten Polyharnstoff nachträglich modifiziert. Besonders bevorzugt erfolgt diese Modifizierung ohne vorherige Isolierung des Polymers. Beispielsweise kann ein verkappte Isocyanat-Gruppen als terminale Gruppen aufweisender hyperverzweigter Polyharnstoff mit geeigneten OH- Gruppen umgesetzt werden. Geeignet hierfür sind insbesondere Aminogruppen und OH-Gruppen aufweisende Verbindungen. Da die Aminogruppen deutlich reaktiver sind als die OH-Gruppen aufweisenden Verbindungen, reagieren bei derartigen Molekülen fast ausschließlich die Aminogruppen. Beispiele geeigneter Verbindungen umfassen Ethanolamin, N-Methylethanolamin, Propanolamin, Isopropanolamin, 2-(Butylamino)ethanol, 2-(Cyclohexylamino)ethanol, 2-Amino-1-butanol, 2-(2'-Aminoethoxy)ethanol oder höhere Alkoxylierungsprodukte des Ammoniaks, 4-Hydroxypiperidin, 1-Hydroxyethylpiperazin, Diethanolamin, Dipropanolamin, Diisopropanolamin, Tris(hydroxymethyl)aminomethan oder Tris(hydroxyethyl)aminomethan.

Hierbei können alle verkappten Isocyanat-Gruppen umgesetzt werden, so dass der modifizierte Polyharnstoff nur OH-Gruppen als terminale Gruppen aufweist. Es kann aber auch nur ein Teil der verkappten Isocyanat-Gruppen umgesetzt werden. Auf diese Art und Weise werden Produkte erhalten, die sowohl verkappte Isocyanat-Gruppen wie OH-Gruppen umfassen. Hyperverzweigte Polyharnstoffe, die OH-, Amino- und verkappte Isocyanat-Gruppen als Endgruppen aufweisen, lassen sich durch Verwendung eines Gemisches aus primären und / oder sekundären Diaminen und Aminoalkoholen zur abschließenden Funktionalisierung erhalten.

OH-Gruppen können aber auch seitenständig eingebaut werden, indem man geeignete Bausteine verwendet. Beispielsweise können zur Kettenverlängerung Diamine, die zusätzlich über eine OH-Gruppe verfügen, z.B. 1,3-Diamino-2-propanol, verwendet werden. Bei einer anderen Vorgehensweise kann bei der eingangs erwähnten Synthese des AB₂-Moleküls ein Teil des Triamins durch einen Aminodialkohol ersetzt werden, beispielsweise durch Bis(aminoethyl)amin, Bis(aminopropyl)amin oder Bis(aminohexyl)amin. Hierdurch entstehen auch AB₂-Moleküle, die eine verkappte IsocyanatGruppe sowie zwei OH-Gruppen aufweisen. Durch Kondensation mit AB₂-Molekülen mit verkappten Isocyanat und Aminogruppen entstehen Polymere, die seitenständig und endständig OH-Gruppen aufweisen. Derartige Polymere können außer den Harnstoff-Verknüpfungen zusätzlich noch Urethan-Verknüpfungen aufweisen.

Weitere Synthesevarianten sind in unserer noch unveröffentlichten deutschen Anmeldung DE 102 04 979.3 offenbart.

Die Molmasse wird vom Fachmann je nach der Art der vorgesehenen Anwendung gewählt. Bewährt haben sich Produkte mit einem Gewichtsmittel M_{W} von 750 bis 40 000 g/mol, bevorzugt 1000 bis 20 000 g/mol und besonders bevorzugt 1500 bis 8000 g/mol.

Die Einheitlichkeit der hyperverzweigten Polyharnstoffe kann in bekannter Art und Weise durch das Verhältnis M_{w}/Mₙ angegeben werden. M_{w}/Mₙ beträgt im allgemeinen 1,2 bis 40, bevorzugt 1,3 bis 20 und ganz besonders bevorzugt 1,5 bis 10.

Die hyperverzweigten Polyharnstoffe können bei der vorliegenden Erfindung auch im Gemisch mit anderen Bindemitteln eingesetzt werden, wobei vorausgesetzt wird, dass durch die Mischung keine unerwünschten Effekte, wie beispielsweise Ausfällungen eintreten. Beispiele für weitere Bindemittel für die erfindungsgemäße Druckfarbe umfassen Polyvinylbutyral, Nitrocellulose, Polyamide, Polyacrylate oder Polyacrylat-Copolymere. Besonders vorteilhaft hat sich die Kombination der hyperverzweigten Polyharnstoffe mit Nitrocellulose erwiesen. Die Gesamtmenge aller Bindemittel in der erfindungsgemäßen Druckfarbe beträgt üblicherweise 5 - 35 Gew. %, bevorzugt 6 - 30 Gew. % und besonders bevorzugt 10 - 25 Gew. % bezüglich der Summe alle Bestandteile. Das Verhältnis der Mengen von hyperverzweigtem Polyharnstoff zu der Gesamtmenge aller Bindemittel liegt üblicherweise zwischen 30/100 bis 1, bevorzugt 40/100 - 1, wobei aber die Menge an hyperverzweigtem Polyharnstoff im Regelfalle 3 Gew. %, bevorzugt 4 Gew. % und besonders bevorzugt 5 Gew. % bezüglich der Summe aller Bestandteile der Druckfarbe nicht unterschreiten sollte.

Es kann ein einzelnes Lösungsmittel oder auch ein Gemisch mehrerer Lösemittel eingesetzt werden. Als Lösemittel prinzipiell geeignet sind die üblichen Lösemittel für Verpackungsdruckfarben. Insbesondere geeignet als Lösemittel für die erfindungsgemäße Druckfarbe sind Alkohole wie beispielsweise Ethanol, 1-Propanol, 2-Propanol, Ethylenglykol, Propylenglykol, Diethylenglykol, substituierte Alkohole wie beispielsweise Ethoxypropanol, Ester wie beispielsweise Ethylacetat, Isopropylacetat, n-Propyl oder n-Butylacetat. Als Lösungsmittel ist weiterhin Wasser prinzipiell geeignet. Besonders bevorzugt als Lösemittel sind Ethanol bzw. Gemische, die zu einem überwiegenden Teil aus Ethanol bestehen. Unter den prinzipiell möglichen Lösemitteln trifft der Fachmann je nach den Löslichkeitseigenschaften des Polyharnstoffes und der gewünschten Eigenschaften der Druckfarbe eine geeignete Auswahl. Es werden üblicherweise 40 bis 80 Gew. % Lösemittel bezüglich der Summe aller Bestandteile der Druckfarbe eingesetzt.

Als Farbmittel können die üblichen Farbstoffe, insbesondere übliche Pigmente eingesetzt werden. Beispiele sind anorganische Pigmente wie beispielsweise Titandioxid-Pigmente oder Eisenoxidpigmente, Interferenzpigmente, Ruße, Metallpulver wie insbesondere Aluminium, Messing oder Kupferpulver, sowie organische Pigmente wie Azo-, Phthalocyanin- oder Isoindolin-Pigmente. Es können selbstverständlich auch Gemische verschiedener Farbstoffe oder Farbmittel eingesetzt werden sowie außerdem lösliche organische Farbstoffe. Es werden üblicherweise 5 bis 25 Gew.% Farbmittel bezüglich der Summe aller Bestandteile eingesetzt.

Die erfindungsgemäße Druckfarbe kann optional weitere Additive und Hilfsstoffe umfassen. Beispiele für Additive und Hilfsstoffe sind Füllstoffe wie Calciumcarbonat, Aluminiumoxidhydrat oder Aluminium- bzw. Magnesiumsilikat. Wachse erhöhen die Abriebfestigkeit und dienen der Erhöhung der Gleitfähigkeit. Beispiele sind insbesondere Polyethylenwachse, oxidierte Polyethylenwachse, Petroleumwachse oder Ceresinwachse. Fettsäureamide können zur Erhöhung der Oberflächenglätte eingesetzt werden. Weichmacher dienen der Erhöhung der Elastizität des getrockneten Films. Beispiele sind Phthalsäureester wie Dibutylphthalat, Diisobutylphthalat, Dioctylphthalat, Citronensäureeseter oder Ester der Adipinsäure. Zum Dispergieren der Pigmente können Dispergierhilfsmittel eingesetzt werden. Bei der erfindungsgemäßen Druckfarbe kann vorteilhaft auf Haftvermittler verzichtet werden, ohne dass die Verwendung von Haftvermittlern damit ausgeschlossen sein soll. Die Gesamtmenge aller Additive und Hilfsstoffe übersteigt üblicherweise nicht 20 Gew. % bezüglich der Summe aller Bestandteile der Druckfarbe und beträgt bevorzugt 0 - 10 Gew. %.

Die Herstellung der erfindungsgemäßen Druckfarbe kann in prinzipiell bekannter Art und Weise durch intensives Vermischen bzw. Dispergieren der Bestandteile in üblichen Apparaturen wie beispielsweise Dissolvern, Rührwerkskugelmühlen oder einem Dreiwalzenstuhl erfolgen. Vorteilhaft wird zunächst eine konzentrierte Pigmentdispersion mit einem Teil der Komponenten und einem Teil des Lösemittels hergestellt, die später mit weiteren Bestandteilen und weiterem Lösemittel zur fertigen Druckfarbe weiter verarbeitet wird.

Die erfindungsgemäßen Drucklacke enthalten naturgemäß keine Farbmittel, weisen aber abgesehen davon die gleichen Bestandteile auf wie die bereits geschilderten Druckfarben. Die Mengen der übrigen Komponenten erhöhen sich dementsprechend.

Die mit der Druckfarbe erhältliche Druckschicht weist im wesentlichen die gleiche Zusammensetzung auf, wie die Druckfarbe, abgesehen davon, dass das Lösemittel und gegebenenfalls vorhandene flüchtige Bestandteile ganz oder teilweise verdampfen.

Die Druckschichten weisen eine hervorragende Haftung sowohl auf polaren wie unpolaren Substraten auf. Sie eignen sich insbesondere zum Herstellen von Mehrschichtmaterialien mit Polyamid- oder Polyesterfolien. Mehrschichtmaterialien mit diesen Folien und der erfindungsgemäßen Druckfarbe weisen eine ganz besonders gute Haftung zwischen den Schichten auf.

Die folgenden Beispiele sollen die Erfindung näher erläutern:

### Herstellung der hyperverzweigten Polyharnstoffe

Für die Erfindung wurden die folgenden hyperverzweigten Polyharnstoffe eingesetzt:

### Beispiel 1:

In einem Reaktionsgefäß mit Rührer, Innenthermometer, Stickstoffeinleitrohr wurden unter Begasung mit trockenem Stickstoff 10 Mol wasserfreies n-Butanol vorgelegt und 1000 ppm (bezogen auf Isocyanat) Diazabicycloctan zugegeben. Anschließend wurde die Lösung auf 60°C erwärmt und 1 Mol Toluylendiisocyanat (TDI) so zugegeben, dass die Temperatur der Reaktionsmischung 70°C nicht überschritt. Nach Zugabe des TDI wurde noch 1 h bei 70°C gerührt. Anschliessend wurden 0,5 Mol Diethylentriamin zugegeben, die Temperatur auf den 130°C erhöht und bei dieser Temperatur 9h reagieren gelassen. Danach wurde die Lösung am Rotationsverdampfer im Vakuum bei 80°C vom Butanol befreit.

Für die GPC-Analytik wurden die Produkte in Dimethylacetamid aufgenommen und in Dimethylacetamid als mobile Phase analysiert.

Die Ergebnisse sind in Tabelle 1 zusammengefasst.

### Beispiel 2:

### Hyperverzweigter Polyharnstoff mit zusätzlichen OH-Gruppen

In einem Reaktionsgefäß mit Rührer, Innenthermometer, Stickstoffeinleitrohr wurde unter Begasung mit trockenem Stickstoff 10 mol trockenes Butanol vorgelegt und 1000 ppm (bezogen auf Isocyanat) Dibutylzinndilaurat zugegeben. Anschließend wurde die Lösung auf 60°C erwärmt und 1 Mol Isophorondiisocyanat (IPDI) so zugegeben, daß die Temperatur der Reaktionsmischung 70°C nicht überschritt. Nach Zugabe des IPDI wurde noch 1 h bei 70°C gerührt. Anschließend wurde ein Gemisch aus 0,438 mol Diethylentriamin und 0,125 mol Diethanolamin zugegeben, und die Temperatur für 10 h auf 125°C, danach für nochmals 10 h auf 135°C erhöht. Danach wurde die Lösung am Rotationsverdampfer im Vakuum bei 80°C vom Butanol befreit.

Für die GPC-Analytik wurden die Produkte in Dimethylacetamid aufgenommen und in Diemthylacetamid als mobile Phase analysiert.
Die Ergebnisse sind in Tabelle 1 zusammengestellt.

### Beispiel 3:

### Nachträgliche Modifizierung der Endgruppen

In einem Reaktionsgefäß mit Rührer, Innenthermometer, Stickstoffeinleitrohr wurde unter Begasung mit trockenem Stickstoff 10 mol trockenes Butanol vorgelegt und 1000 ppm (bezogen auf Isocyanat) Dibutylzinndilaurat zugegeben. Anschließend wurde die Lösung auf 60°C erwärmt und 1 Mol IPDI so zugegeben, dass die Temperatur der Reaktionsmischung 70°C nicht überschritt. Nach Zugabe des Isocyanats wurde noch 1 h bei 70°C gerührt. Anschliessend wurde 0,5 mol Diethylentriamin zugegeben, die Temperatur auf 125°C erhöht und bei dieser Temperatur 10 h reagieren gelassen. Danach wurde die Temperatur auf 135°C erhöht und nochmals 10 h bei dieser Temperatur gerührt. Anschliessend wurden 0,5 mol Diethanolamin zugegeben, nochmals 5 h bei 135°C gerührt und anschließend die Lösung am Rotationsverdampfer im Vakuum bei 80°C vom Butanol befreit.

Für die GPC-Analytik wurde das Produkt in Dimethylacetamid aufgenommen und in Dimethylacetamid als mobile Phase analysiert.

**Tabelle 1: Zusammenfassung der Ergebnisse**

| Nr. | Isocyanat | Amin oder Aminmischung | Zeit / Temperatur | Endgruppen-Modifizierung | Produkt, Molekulargewicht aus GPC-Daten (PMMA-Eichung) | |
|---|---|---|---|---|---|---|
| | | | | | Mw | Mn |
| 1 | 1 mol TDI | Diethylen triamin | 9 h bei 130 °C | nein | 4410 | 2500 |
| 2 | 1 mol IPDI | 0,438 Mol Diethylentriamin + 0,125 Mol Diethanol amin | 10 h bei 125 °C und 10 h bei 135°C | nein | 3680 | 2290 |
| 3 | 1 mol IDPI | 0,5 mol Diethylen triamin | 10 h bei 125 °C und 10 h bei 135°C | Mit 0,5 mol Diethanol amin 5 h, 135 °C | 4230 | 2110 |

### Herstellung von Druckfarben

Es wurden mehrere Flexodruckfarben durch intensives Vermischen der folgenden Komponenten hergestellt.
- 70,0: Pigment Präparation (BASF Drucksysteme)
- 6,0: Hyperverzweigter Polyharnstoff
- 8,0: Nitrocellulose (Wolf)
- 1,0: Oleamid (Croda)
- 0,5: PE-Wachse (BASF AG)
- 2,0: Dibutylphthalat (Brenntag)
- 10,5: Ethanol
- 2,0: Haftvermittler Titanchelat (Du Pont)

In einer zweiten Serie wurden die gleichen Komponenten eingesetzt, aber lediglich der Haftvermittler weggelassen. Zu Vergleichszwecken wurden außerdem Flexodruckfarben mit konventionellen PU-Bindemitteln hergestellt (PUR 7313 (BASF)), die gemäß dem Stand der Technik üblicherweise für diesen Zweck eingesetzt werden. In Tabelle 2 sind die Formulierungen zusammengestellt:

**Tabelle 2: Zusammensetzung der getesteten Druckfarben**

| Nr. | Bindemittel | Haftvermittler |
|---|---|---|
| Druckfarbe 1 | Gemäß Beispiel 1 | ja |
| Druckfarbe 2 | Gemäß Beispiel 1 | nein |
| Druckfarbe 3 | Gemäß Beispiel 2 | ja |
| Druckfarbe 4 | Gemäß Beispiel 2 | nein |
| Druckfarbe 5 | Gemäß Beispiel 3 | ja |
| Druckfarbe 6 | Gemäß Beispiel 3 | nein |
| Druckfarbe 7 | Konventionelles PU-Bindemittel | ja |
| | (PUR 7313 (BASF)) | |
| Druckfarbe 8 | Konventionelles PU-Bindemittel | nein |
| | (PUR 7313 (BASF)) | |

### Haftung auf Substraten

Es wurde sie Haftung der erfindungsgemäßen auf polaren Folien aus Polyamid und PET sowie auf einer unpolaren Folie aus PP bestimmt.

### Messmethode:

Das Prüfverfahren "Tesafestigkeit" dient zur Bestimmung der Haftung eines Druckfarbenfilms auf dem Bedruckstoff.

### Durchführung der Prüfung

Die auf Druckviskosität verdünnte Farbe wird auf der jeweiligen Folie angedruckt oder mit einem 6 µm-Rakel aufgezogen. Ein Tesabandstreifen (Klebeband mit 19 mm Breite (Artikel BDF 4104, Beiersdorf AG) wird auf den Druckfarbenfilm aufgeklebt, gleichmäßig angedrückt und nach 10 Sekunden wieder abgerissen. Dieser Vorgang wird auf derselben Stelle des Prüflings jeweils mit einem neuen Tesabandstreifen 4 mal wiederholt. Jeder Tesastreifen wird nacheinander auf ein weißes Papier, bei weißen Farben auf Schwarzpapier aufgeklebt. Die Prüfung erfolgt sofort nach Applikation der Farbe.

### Auswertung

Es erfolgt eine visuelle Prüfung der Oberfläche des Prüflings auf Beschädigung. Die Benotung erfolgt von 1 (sehr schlecht) bis 5 (sehr gut). In Tabellen 3 und 4 sind die Ergebnisse der Tests zusammengefasst.

**Tabelle 3: Testergebnisse mit Druckfarben, die Haftvermittler enthalten**

| | PP-Folie (MB 400) | PET-Folie (Melinex 800) | Polyamid-Folie (Walomid XXL) |
|---|---|---|---|
| Druckfarbe 1 | 5 | 5 | 2 |
| Druckfarbe 3 | 5 | 4 | 1 |
| Druckfarbe 5 | 5 | 4 | 1 |
| Druckfarbe 7 (Vergleich) | 5 | 3 | 1 |

**Tabelle 4: Testergebnisse mit Druckfarben, die keinen Haftver mittler enthalten**

| | PP-Folie (MB 400) | PET-Folie (Melinex 800) | Polyamid-Folie (Walomid XXL) |
|---|---|---|---|
| Druckfarbe 2 | 5 | 5 | 2 |
| Druckfarbe 4 | 5 | 4 | 1 |
| Druckfarbe 6 | 5 | 4 | 1 |
| Druckfarbe 8 (Vergleich) | 1 | 1 | 1 |

### Herstellung von Verbundmaterialien

Mit den Druckfarben 1 bis 8 wurden Mehrschichtmaterialien hergestellt mit verschiedenen Folien hergestellt. Die Qualität der Verbunde wird durch die Bestimmung der Verbundhaftung zwischen zwei durch Kaschierung verbundenen Folien bestimmt.

### Beispiele. 4 - 10

### Allgemeine Arbeitsvorschrift

Die auf Druckviskosität verdünnte Farbe wird auf Folie 1 als Bedruckstoff angedruckt. Parallel dazu wird die Kaschierfolie (Folie 2) mit einer Kleber-Härter-Mischung (R & H MOR-FREE A 4123 / Härter C 88)) so beschichtet, dass eine Filmdicke von etwa 6 µm resultiert. Beide Folien werden anschließend so verpresst, dass die Druckfarbe und der Kleber in Kontakt kommen. Nach dem Verpressen werden die Verbundfolien 3 Tage bei 60°C gelagert und danach der Verbundwert bestimmt. Die Ergebnisse der Tests sind in Tabelle 5 zusammengestellt.

### Testmethode:

### Mess- und Prüfgeräte: Zugfestigkeitsprüfgerät Fa. Zwick Stanzwerkzeug (Breite: 15mm)

Von dem zu testenden Verbundmaterial werden mindestens je 2 Streifen (Breite: 15mm) längs und quer zur Folienbahn zugeschnitten werden. Zur Erleichterung der Trennung (Delaminierung) des Verbundes können die Enden der ausgestanzten Streifen in ein geeignetes Lösungsmittel (z.B. 2-Butanon) getaucht werden, bis sich die Materialien voneinander lösen. Danach wird das Muster wieder sorgfältig getrocknet. Die delaminierten Enden der Prüflinge werden in den Zugfestigkeitsprüfer eingespannt. Der weniger dehnfähige Film wird in die obere Klemme eingelegt werden. Beim Anlauf der Maschine sollte das Ende des Musters im rechten Winkel zur Zugrichtung gehalten werden, wodurch ein konstanter Zug gewährleistet wird. Die Abzugsgeschwindigkeit beträgt 100 mm/min., der Abzugswinkel der getrennten Filme zum nichtgetrennten Komplex 90°.

### Auswertung:

Abgelesen wird der Verbundwert als Mittelwert, Angabe in N / 15mm.

**Tabelle 5: Ergebnisse zu den Verbunden, Polyamid-Folie: Walomid XXL, PET-Folie : Melinex 800, PP-Folie MB 400**

| Beispiel | Folie 1 Bedruckstoff | Folie 2 Kaschierfolie | Druckfarbe | Haftvermittler | Verbundwert (N/15 mm) |
|---|---|---|---|---|---|
| Beispiel 4 | Polyamid | PE | Druckfarbe 1 | Ja | 7,7 |
| Beispiel 5 | Polyamid | PE | Druckfarbe 2 | nein | 9,5 |
| Beispiel 6 | PET | PE | Druckfarbe 1 | Ja | 4,5 |
| Beispiel 7 | PET | PE | Druckfarbe 2 | nein | 3,2 |
| Beispiel 9 | PP | PE | Druckfarbe 1 | Ja | 3,3 |
| Beispiel 10 | PP | PE | Druckfarbe 2 | nein | 4,2 |
| Vergleichsbeispiel 1 | Polyamid | PE | Druckfarbe 7 | Ja | < 0,5 |
| Vergleichsbeispiel 2 | Polyamid | PE | Druckfarbe 8 | nein | < 0,5 |
| Vergleichsbeispiel 3 | PP | PE | Druckfarbe 7 | Ja | 2,5 |
| Vergleichsbeispiel 4 | PP | PE | Druckfarbe 8 | nein | < 0,5 |

Die Testergebnisse zeigen, dass die Haftung der erfindungsgemäßen Druckfarben auch auf chemisch verschiedenen Folientypen durch die Verwendung der hyperverzweigten Polyharnstoffe im Vergleich zu konventionellen Bindemitteln deutlich verbessert wird.

Besonders überraschend ist die Tatsache, dass auf Haftvermittler verzichtet werden kann und dennoch sehr gute Ergebnisse erzielt werden.

Die Vorteile im Vergleich zum Stand der Technik sind bei den erfindungsgemäßen Mehrschichtmaterialien noch deutlicher ausgeprägt. Bei konventionellen Systemen wird bei polaren Folien nach Weglassen des Haftvermittlers überhaupt keine Haftung mehr erzielt. Die erfindungsgemäßen Mehrschichtmaterialien mit hyperverzweigten Polyharnstoffen zeigen gerade bei Verwendung von polaren Folien eine hervorragende Haftung.

Dieses Ergebnis ist umso überraschender als die einfachen Tesatests dieses sehr gute Ergebnis nicht erwarten ließen.

## Patentansprüche

1. Mehrschichtmaterial zum Herstellen von Verpackungen umfassend mindestens
• eine Folie 1 aus einem polymeren Material,
• mindestens eine Druckschicht, erhältlich durch Bedrucken oder Beschichten mit einer Druckfarbe,
• eine weitere Folie 2,
**dadurch gekennzeichnet, dass** die Druckfarbe mindestens einen funktionelle Gruppen aufweisenden, hyperverzweigten Polyharnstoff als Bindemittel umfaßt, wobei die funktionellen Gruppen aus der Gruppe von Amino-, OH- oder verkappten Isocyanat-Gruppen ausgewählt werden.

2. Mehrschichtmaterial gemäß Anspruch 1, **dadurch gekennzeichnet, dass** die Druckschicht zwischen den beiden Folien angeordnet ist.

3. Mehrschichtmaterial gemäß Anspruch 1 oder 2, **dadurch gekennzeichnet, dass** die Druckschicht direkt auf die Folie 1 oder Folie 2 aufgedruckt ist.

4. Mehrschichtmaterial gemäß einem der Ansprüche 1 bis 3, **dadurch gekennzeichnet dass** es sich bei der Folie 1 um eine mehrschichtige Folie handelt.

5. Mehrschichtmaterial gemäß einem der Ansprüche 1 bis 4, **dadurch gekennzeichnet**, das es sich bei der Folie 1 um eine Folie ausgewählt aus der Gruppe von Polyethylen-, Polypropylen-, Polystyrol-, Polyester- oder Polyamidfolien handelt.

6. Mehrschichtmaterial gemäß Anspruch 5, **dadurch gekennzeichnet, dass** es sich bei Folie 1 um eine polare Folie ausgewählt aus der Gruppe von PET-, PEN- oder Polyamid-Folien handelt.

7. Mehrschichtmaterial gemäß einem der Ansprüche 1 bis 6, **dadurch gekennzeichnet, dass** es sich bei der weiteren Folie 2 um eine Folie ausgewählt aus der Gruppe von Polymerfolien, metallisierten Polymerfolien oder Metallfolien handelt.

8. Mehrschichtmaterial gemäß Anspruch 7, **dadurch gekennzeichnet, dass** es sich bei der Folie 2 um eine Polyolefin-Folie handelt.

9. Mehrschichtmaterial gemäß einem der Ansprüche 1 bis 8, **dadurch gekennzeichnet, dass** das Material zusätzlich eine Geruchssperrschicht umfasst.

10. Mehrschichtmaterial gemäß einem der Ansprüche 1 bis 9 **dadurch gekennzeichnet, dass** das Material zusätzlich eine oder mehrere Klebeschichten aufweist.

11. Mehrschichtmaterial gemäß einem der Ansprüche 1 bis 10, **dadurch gekennzeichnet, dass** das Mehrschichtmaterial zusätzlich mindestens eine Lackschicht als Grundierung oder Schutz aufweist.

12. Mehrschichtmaterial gemäß Anspruch 11, **dadurch gekennzeichnet, dass** die Lackschicht mindestens einen funktionelle Gruppen aufweisenden, hyperverzweigten Polyharnstoff als Bindemittel aufweist, wobei die funktionellen Gruppen aus der Gruppe von Amino-, OH- oder verkappten Isocyanat-Gruppen ausgewählt werden.

13. Verwendung einer Druckfarbe, mindestens umfassend mindestens ein Lösemittel oder ein Gemisch verschiedener Lösemittel, mindestens ein Farbmittel, mindestens ein polymeres Bindemittel sowie optional weitere Zusatzstoffe, wobei es sich bei mindestens einem der polymeren Bindemittel um einen funktionelle Gruppen aufweisenden, hyperverzweigten Polyharnstoff handelt und die funktionellen Gruppen aus der Gruppe von Amino-, OH- oder verkappten Isocyanat-Gruppen ausgewählt werden, zum Herstellen von Mehrschichtmaterialien.

14. Verwendung gemäß Anspruch 13, umfassend das Bedrucken von Kunststoff- oder Metallfolien.

15. Verwendung eines Drucklackes, mindestens umfassend mindestens ein Lösemittel oder ein Gemisch verschiedener Lösemittel, mindestens ein polymeres Bindemittel sowie optional weitere Zusatzstoffe, wobei es sich bei mindestens einem der polymeren Bindemittel um einen funktionelle Gruppen aufweisenden, hyperverzweigten Polyharnstoff handelt und die funktionellen Gruppen aus der Gruppe von Amino-, OH- oder verkappten Isocyanat-Gruppen ausgewählt werden, zum Herstellen von Mehrschichtmaterialien.

16. Verwendung Anspruch 15, umfassend das Grundieren von Kunststoff- oder Metallfolien oder das Aufbringen einer Schutzschicht.

## Claims

1. A multilayer material for producing packaging, comprising at least
• one film 1 of a polymeric material,
• one print layer obtainable by printing or coating with a printing ink,
• one further film 2,
wherein said printing ink comprises as binder at least one hyperbranched polyurea containing functional groups selected from the group consisting of amino, OH, and blocked isocyanate groups.

2. The multilayer material according to claim 1 wherein the print layer is arranged between the two films.

3. The multilayer material according to claim 1 or 2, wherein the print layer is printed directly onto film 1 or film 2.

4. The multilayer material according to any of claims 1 to 3, wherein film 1 is a multilayer film.

5. The multilayer material according to any of claims 1 to 4, wherein film 1 is a film selected from the group consisting of polyethylene, polypropylene, polystyrene, polyester, and polyamide films.

6. The multilayer material according to claim 5, wherein film 1 is a polar film selected from the group consisting of PET, PEN, and polyamide films.

7. The multilayer material according to any of claims 1 to 6, wherein a further film 2 is a film selected from the group consisting of polymer films, including metallized polymer films, and metal foils.

8. The multilayer material according to claim 7, wherein film 2 is a polyolefin film.

9. The multilayer material according to any of claims 1 to 8, further comprising an odor barrier layer.

10. The multilayer material according to any of claims 1 to 9, further comprising one or more adhesive layers.

11. The multilayer material according to any of claims 1 to 10, further comprising at least one varnish layer as primer or protector.

12. The multilayer material according to claim 11, wherein the varnish layer comprises as binder at least one hyperbranched polyurea containing functional groups selected from the group consisting of amino, OH, and blocked isocyanate groups.

13. The use of a printing ink at least comprising at least one solvent or a mixture of different solvents, at least one colorant, at least one polymeric binder, and, optionally, additives as well, wherein at least one of the polymeric binders is a hyperbranched polyurea containing functional groups and the functional groups are selected from the group consisting of amino, OH, and blocked isocyanate groups, for producing multilayer materials.

14. The use according to claim 13 comprising printing polymer films or metal foils.

15. The use of a printing varnish at least comprising at least one solvent or a mixture of different solvents, at least one polymeric binder, and, optionally, additives as well, wherein at least one of the polymeric binders is a hyperbranched polyurea containing functional groups and the functional groups are selected from the group consisting of amino, OH, and blocked isocyanate groups, for producing multilayer materials.

16. The use according to claim 15 comprising priming polymer films or metal foils or applying a protective layer.

## Revendications

1. Matériau multicouche pour la fabrication d'emballages, comprenant au moins :
• une feuille 1 d'un matériau polymère,
• au moins une couche d'impression, que l'on peut obtenir par impression ou enduction avec une encre d'impression,
• une feuille additionnelle 2,
**caractérisé en ce que** l'encre d'impression comprend comme agent liant au moins une polyurée hyperramifiée présentant des groupements fonctionnels, les groupements fonctionnels étant choisis dans le groupe des groupements amino, OH ou isocyanate coiffé.

2. Matériau multicouche selon la revendication 1, **caractérisé en ce que** la couche d'impression est aménagée entre les deux feuilles.

3. Matériau multicouche selon la revendication 1 ou 2, **caractérisé en ce que** la couche d'impression est appliquée directement sur la feuille 1 ou la feuille 2.

4. Matériau multicouche selon l'une quelconque des revendications 1 à 3, **caractérisé en ce que** la feuille 1 est une feuille à plusieurs couches.

5. Matériau multicouche selon l'une quelconque des revendications 1 à 4, **caractérisé en ce que** la feuille 1 est une feuille choisie dans le groupe des feuilles de polyéthylène, de polypropylène, de polystyrène, de polyester ou de polyamide.

6. Matériau multicouche selon la revendication 5, **caractérisé en ce que** la feuille 1 est une feuille polaire choisie dans le groupe des feuilles de PET, de PEN ou de polyamide.

7. Matériau multicouche selon l'une quelconque des revendications 1 à 6, **caractérisé en ce que** la feuille additionnelle 2 est une feuille choisie dans le groupe des feuilles polymères, des feuilles polymères métallisées ou des feuilles métalliques.

8. Matériau multicouche selon la revendication 7, **caractérisé en ce que** la feuille 2 est une feuille de polyoléfine.

9. Matériau multicouche selon l'une quelconque des revendications 1 à 8, **caractérisé en ce que** le matériau comprend également une couche barrière aux odeurs.

10. Matériau multicouche selon l'une quelconque des revendications 1 à 9, **caractérisé en ce que** le matériau présente en outre une ou plusieurs couches adhésives.

11. Matériau multicouche selon l'une quelconque des revendications 1 à 10, **caractérisé en ce que** le matériau multicouche présente en outre au moins une couche de vernis comme apprêt ou protection.

12. Matériau multicouche selon la revendication 11, **caractérisé en ce que** la couche de vernis présente comme agent liant au moins une polyurée hyperramifiée présentant des groupements fonctionnels, les groupements fonctionnels étant choisis dans le groupe des groupements amino, OH ou isocyanate coiffé.

13. Utilisation d'une encre d'impression comprenant au moins un solvant ou un mélange de divers solvants, au moins un colorant, au moins un agent liant polymère ainsi qu'éventuellement d'autres additifs, dans laquelle au moins l'un des agents liants polymères est une polyurée hyperramifiée présentant des groupements fonctionnels et les groupements fonctionnels sont choisis dans le groupe des groupements amino, OH ou isocyanate coiffé, pour fabriquer des matériaux multicouches.

14. Utilisation selon la revendication 13, comprenant l'impression de feuilles synthétiques ou métalliques.

15. Utilisation d'un vernis d'impression comprenant au moins un solvant ou un mélange de divers solvants, au moins un agent liant polymère ainsi qu'éventuellement d'autres additifs, dans laquelle au moins l'un des agents liants polymères est une polyurée hyperramifiée présentant des groupements fonctionnels et les groupements fonctionnels sont choisis dans le groupe des groupements amino, OH ou isocyanate coiffé, pour fabriquer des matériaux multicouches.

16. Utilisation selon la revendication 15, comprenant l'apprêtage de feuilles synthétiques ou métalliques ou l'application d'une couche protectrice.
